# EUROPEAN PATENT APPLICATION

(11) **EP 4 417 909 A1**
(43) Date of publication of application: **21.08.2024**
(21) Application number: 23210798.7
(22) Date of filing: 20.11.2023
(51) Int. Cl.: F25D 23/02

(54) **METHOD FOR CHANGING COLOR OF PANEL AND HOME APPLIANCE**

(30) Priority: 16.02.2023 KR 20230020853
(71) Applicant: LG Electronics Inc., Yeongdeungpo-gu Seoul 07336 (KR)
(72) Inventor: Kim, Chang Won, Seoul 08592 (KR); Lee, Jungjae, Seoul 08592 (KR); Kim, Jihoon, Seoul 08592 (KR); You, Chanyang, Seoul 08592 (KR); Lee, Donggeun, Seoul 08592 (KR)
(74) Representative: Ter Meer Steinmeister & Partner

(57) **Abstract**

The present disclosure relates to a method for changing color of a panel and a home appliance and the method for changing color of a panel includes providing graphic objects and color control buttons corresponding to a plurality of panels of the home appliance; receiving selected color information; and controlling a lighting device to make the panel shine according to received color information.

## Description

### BACKGROUND

The present disclosure relates to a method for changing color of a panel and a home appliance.

In general, home appliances such as refrigerators, clothes managers, dishwashers, and cooking appliances include a cabinet that accommodates objects to be processed and a door that opens and closes the cabinet.

Whether home appliances are used or not, the components that are most visible to users are doors and other panels that form an outer appearance.

US Patent No. 8789900 discloses a structure in which a decoration panel that forms the outer appearance of a refrigerator is mounted on the front surface of the door of the refrigerator. However, these refrigerators have a problem in that if the user wants to change the outer appearance, the entire decoration panel must be replaced.

Meanwhile, if the outer appearance of home appliances can be changed to reflect the user's taste, it is expected to improve the user's aesthetic satisfaction.

### SUMMARY

An object of the present disclosure is to provide a method for setting an appearance for a panel including setting and/or changing - color and/or theme of a panel of a home appliance (e.g. refrigerator) and a home appliance - that can actively reflect a user's taste/desire through interaction between the user and the product (e.g. home appliance, refrigerator) wherein the appearance of the panel i.e. a color and/or a theme of the panel can be implemented in various ways.

In a first aspect of the present technique is presented a method for setting an appearance of a panel, for example changing color of a panel including: providing graphic objects and color control buttons corresponding to a plurality of panels of the home appliance; receiving selected color information; and controlling a lighting device to make the panel shine according to received color information.

In a second aspect of the present technique is presented, a method for setting an appearance of a panel of a home appliance, the panel providing an outer appearance of the home appliance and configured to receive light emitted by a lighting device of the home appliance and to shine by transmitting therethrough the received light to an outside of the home appliance, the method comprising: providing, on a touch screen display, a user interface including one or more first graphic objects and one or more control buttons, wherein the one or more first graphic objects represents one or more panels of the home appliance, respectively, and the one or more control buttons is configured to receive user input corresponding to a selection of a color for a panel of the home appliance and/or corresponding to a selection of a theme for a panel of the home appliance; receiving, on the one or more control buttons, one or more user inputs for selecting by the user a color and/or a theme for the panel of the home appliance and correspondingly generating information on the color selected by the user and/or information on the theme selected by the user; receiving, by a controller of the home appliance, the information on the color selected by the user and/or the information on the theme selected by the user; and controlling, by the controller of the home appliance, the lighting device to make the panel shine according to the information on the color so received and/or according to the information on the theme so received.

In a third aspect of the present technique is presented, a home appliance comprising: a cabinet having storage space; a door for opening and closing the storage space; a lighting device for emitting light; a panel providing an outer appearance of the home appliance and configured to receive light emitted by the lighting device and to shine by transmitting therethrough the received light to an outside of the home appliance; a manipulation unit for receiving a user input, wherein the manipulation unit comprises a touch screen display; and a controller configured to communicate with the touch screen display and configured to control the touch screen display and the lighting device, wherein the controller is configured to perform a method according to any of the aforementioned first and the second aspect.

In a fourth aspect of the present technique is presented, a system comprising: a home appliance and a remote device configured to communicate with each other; wherein the home appliance comprises: a cabinet having storage space, a door for opening and closing the storage space, a lighting device for emitting light, a panel providing an outer appearance of the home appliance and configured to receive light emitted by the lighting device and to shine by transmitting therethrough the received light to an outside of the home appliance, and a controller configured to control the lighting device; wherein the remote device comprises a touch screen display; and wherein the remote device and the controller of the home appliance are configured to perform a method according to any one the aforementioned first and the second aspect. The remote device is configured: - to provide, on the touch screen display, a user interface including one or more first graphic objects and one or more control buttons, wherein the one or more first graphic objects represents one or more panels of the home appliance, respectively, and the one or more control buttons is configured to receive user input corresponding to a selection of a color for a panel of the home appliance and/or corresponding to a selection of a theme for a panel of the home appliance, and - to receive, on the one or more control buttons, one or more user inputs for selecting by the user a color and/or a theme for the panel of the home appliance and correspondingly generate information on the color selected by the user and/or information on the theme selected by the user; and wherein the controller of the home appliance is configured: - to receive the information on the color selected by the user and/or the information on the theme selected by the user, and - to control the lighting device to make the panel shine according to the information on the color so received and/or according to the information on the theme so received.

In a fifth aspect of the present technique is presented a home appliance comprising: a cabinet having storage space; a door for opening and closing the storage space; a lighting device for emitting light; a panel providing an outer appearance of the home appliance and configured to receive light emitted by the lighting device and to shine by transmitting therethrough the received light to an outside of the home appliance; a controller; and a manipulation unit for receiving a user input, wherein the manipulation unit comprises a touch screen display configured to communicate with the controller; wherein the controller is configured to control the touch screen display: - to provide, on the touch screen display, a user interface including one or more first graphic objects and one or more control buttons, wherein the one or more first graphic objects represents one or more panels of the home appliance, respectively, and the one or more control buttons is configured to receive user input corresponding to a selection of a color for a panel of the home appliance and/or corresponding to a selection of a theme for a panel of the home appliance; and wherein the touch screen display is configured: - to receive, on the one or more control buttons, one or more user inputs for selecting by the user a color and/or a theme for the panel of the home appliance and correspondingly generate information on the color selected by the user and/or information on the theme selected by the user; and wherein the controller is further configured: - to receive the information on the color selected by the user and/or the information on the theme selected by the user, and - to control the lighting device to make the panel shine according to the information on the color so received and/or according to the information on the theme so received.

In a sixth aspect of the present technique is presented a system comprising: a home appliance and a remote device configured to communicate with each other; wherein the home appliance comprises: a cabinet having storage space, a door for opening and closing the storage space, a lighting device for emitting light, a panel providing an outer appearance of the home appliance and configured to receive light emitted by the lighting device and to shine by transmitting therethrough the received light to an outside of the home appliance, and a controller configured to control the lighting device; wherein the remote device comprises a touch screen display, and is configured: - to provide, on the touch screen display, a user interface including one or more first graphic objects and one or more control buttons, wherein the one or more first graphic objects represents one or more panels of the home appliance, respectively, and the one or more control buttons is configured to receive user input corresponding to a selection of a color for a panel of the home appliance and/or corresponding to a selection of a theme for a panel of the home appliance, and - to receive, on the one or more control buttons, one or more user inputs for selecting by the user a color and/or a theme for the panel of the home appliance and correspondingly generate information on the color selected by the user and/or information on the theme selected by the user; and wherein the controller of the home appliance is configured: - to receive the information on the color selected by the user and/or the information on the theme selected by the user, and - to control the lighting device to make the panel shine according to the information on the color so received and/or according to the information on the theme so received.

In a seventh aspect of the present technique is presented a method for setting an appearance, for example setting a theme or changing color, of a panel according to an embodiment of the present disclosure includes: providing graphic objects corresponding to a plurality of panels of the home appliance and a plurality of theme graphic objects representing a plurality of themes, respectively; receiving theme information including color information of a graphic object selected from the plurality of theme graphic objects; controlling a lighting device to make the panel shine according to the received color information.

Any one of the aforementioned first to seventh aspect may include one or more of the following.

The door may include the panel.

The home appliance may be a refrigerator. The door of the refrigerator may include the panel.

The color control button may provide selection buttons to adjust the R, G, and B values of color, respectively.

The providing graphic objects and color control buttons corresponding to a plurality of panels of home appliances may include: changing the color of a selected graphic object by selecting one of the graphic objects corresponding to the plurality of panels and adjusting the color control button.

The color control button may provide control buttons to adjust the saturation or brightness of the color.

The panel may have a first color when the lighting device is turned off, and the controlling the lighting device may control the lighting device to emit light in a second color so that the panel shines in a third color according to selected color information.

The method for changing color of a panel of claim may further includes recognizing a graphic code including information of the first color and obtaining a correction value for calculating information of the second color.

A method for changing color of a panel according to an embodiment of the present disclosure includes: providing graphic objects corresponding to a plurality of panels of the home appliance and a plurality of theme graphic objects representing a plurality of themes, respectively; receiving theme information including color information of a graphic object selected from the plurality of theme graphic objects; controlling a lighting device to make the panel shine according to the received color information.

The theme information may further include sound source information, and the controlling the lighting device may control a speaker to be output according to the sound source information.

The theme information may further include control information for varying the color and brightness of the plurality of light sources constituting the lighting device over time, and the controlling the lighting device may control to implement dynamic effects on the panel according to the control information.

The providing the plurality of theme graphic objects may further include a selecting button for setting the time at which the lighting device is operated, and wherein, in the controlling the lighting device, the lighting device may operate according to the received operation time.

The method for changing color of a panel may further include a night mode step of controlling the brightness of the lighting device to be darker than before when the illuminance value detected by the illuminance sensor is below a set value.

The night mode step may include; providing information about the illuminance value detected by the illuminance sensor; displaying a display to select whether to operate the night mode when the illuminance value is the detected illuminance value or less; when a user selects night mode operation, changing the setting value to the detected illuminance value or less.

The method for changing color of a panel may further include activating a night mode when the illuminance value detected by the illuminance sensor is the changed setting value or less.

A home appliance according to an embodiment of the present disclosure includes a cabinet having storage space; a door opening and closing the storage space; and a controller, in which the door includes a panel forming the front surface and including a lighting device, and the controller is configured to control the lighting device to make the panel shine with a color according to the color information when receiving color information selected by the user.

The panel may have a first color when the lighting device is turned off, and the controller may be controlled to control the lighting device to emit light in a second color so that the panel shines in a third color according to selected color information.

The controller may be configured to receive sound source information selected by the user and to control a speaker to output sound according to the sound source information.

The lighting device may be controlled to receive control information to vary the color and brightness of a plurality of light sources constituting the lighting device over time, and control the lighting device to implement a dynamic effect on the panel according to the control information.

The controller may be configured to: control to a night mode where the brightness of the lighting device is controlled to be dimmer than before, if the illuminance value detected by the illuminance sensor is the set value or less, provide information about the illuminance value detected by the illuminance sensor to the user's remote device, and change the setting value to the detected illuminance value when the user selects night mode operation at the detected illuminance value.

According to one embodiment of the present disclosure, a user can intuitively and conveniently select a color applied to a panel of a home appliance.

According to an embodiment of the present disclosure, the user's taste can be actively reflected through interaction between the user and the product, thereby improving the user's aesthetic satisfaction.

### BRIEF DESCRIPTION OF THE DRAWINGS

FIG. 1 is a front view illustrating a refrigerator according to an embodiment of the present disclosure.
FIG. 2 is a perspective view illustrating the door.
FIG. 3 is an exploded perspective view illustrating a state where the panel forming the front surface of the door is separated.
FIG. 4 is an exploded perspective view illustrating the lower bracket, lighting device, and lighting supporter, which are components of the panel.
FIG. 5 is a block diagram illustrating the flow of control signals of a refrigerator.
FIG. 6 is a flowchart for explaining a method of controlling the color of the panel with My Collection according to the first embodiment.
FIG. 7 is a diagram illustrating an example of a user interface for explaining a method of controlling the color of the panel with My Collection according to the first embodiment.
FIG. 8 is a flowchart for explaining a method of controlling the color of the panel by fine-tuning color tone according to the second embodiment.
FIG. 9 is a diagram illustrating an example of a user interface for explaining a method of controlling the color of the panel by fine-tuning color tone according to the second embodiment.
FIG. 10 is a flowchart for explaining a method of controlling the color of the panel with an artist collection according to the third embodiment.
FIG. 11 is a diagram illustrating an example of a user interface for explaining a method of adjusting the color of the panel with an artist collection according to the third embodiment.
FIG. 12 is a flowchart for explaining a method of controlling a lighting device by reflecting the panel's own color according to the fourth embodiment.
FIG. 13 is a flowchart for explaining a method of controlling an illumination sensor based on ambient brightness according to the fifth embodiment.
FIG. 14 is a diagram illustrating an example of a user interface for explaining a method of controlling a home appliance with a user customization function according to the sixth embodiment.
FIG. 15 is a diagram illustrating an example of adjusting the colors of home appliances using a remote device.

### DETAILED DESCRIPTION OF THE EMBODIMENTS

Hereinafter, specific embodiments of the present disclosure will be described in detail with drawings. However, the present disclosure cannot be said to be limited to the embodiments in which the spirit of the present disclosure is presented, and other degenerative disclosures or other embodiments included in the scope of the present disclosure can be easily suggested by adding, changing, or deleting other components.

The refrigerator, used as a non-limiting example of a home appliance of the present disclosure includes a panel equipped with a lighting device on the front surface, and a color set by a user through a remote device can be implemented on the panel.

Home appliances of the present disclosure may include refrigerators, air conditioners, air purifiers, vacuum cleaners, cooking appliances, dishwashers, clothes care machines, washing machines, or the like. However, the type of home appliance is not limited to the above example, and may be included without limitation as long as it is provided in the user's home and helps the user with housework.

First, the refrigerator is described as a type of home appliance, and the description of the refrigerator can also be applied to other types of home appliances.

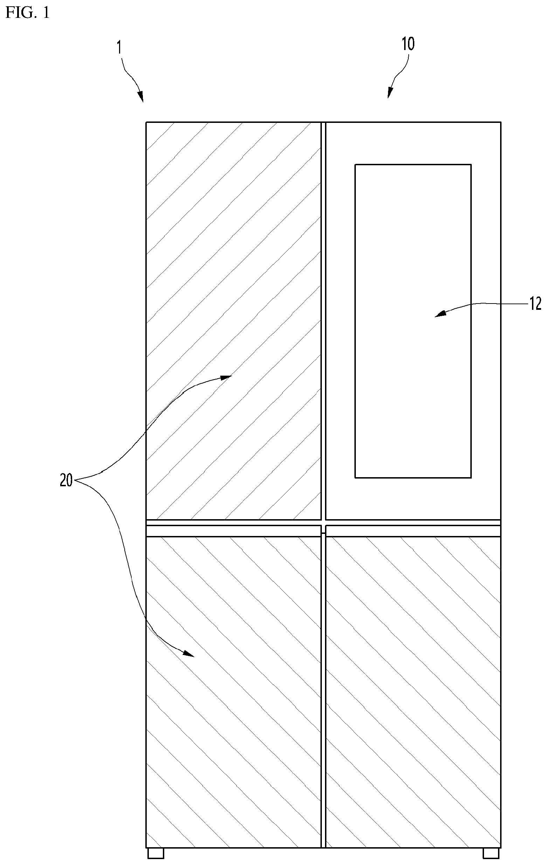

FIG. 1 is a front view illustrating a refrigerator according to an embodiment of the present disclosure.

The refrigerator 1 is a home appliance that keeps food fresh by including a cabinet 10 with a storage space for storing food and a cold air supply device that supplies cold air to the storage space.

At least one side of the storage space provided in the cabinet 10 may be open for introduction and withdrawal of food. The openable side can be opened and closed by the door 20.

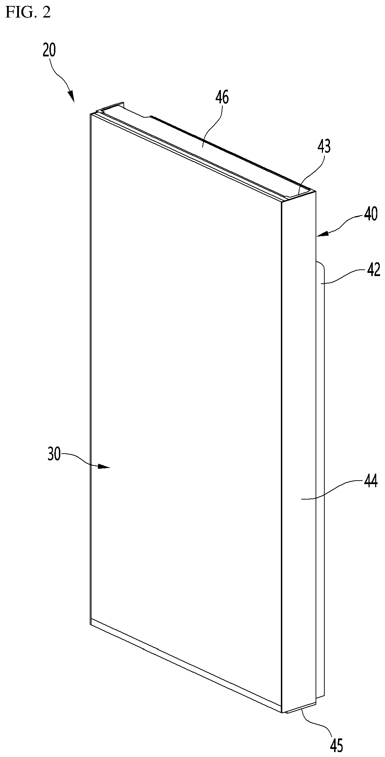

As shown for example in FIG 2, the door 20 may include a door body 40 and a panel 30. The panel 30 may be detachably coupled to the door body 40.

The panel 30 may be provided at or may form the front surface of the door 20, and the door body 40 may be provided at or may form the rear surface of the door 20, that is, facing the inside of the cabinet 10. The front surface of the door 20 may refer to the side visible to the user when the door 20 is closed, and the rear surface of the door 20 may refer to the side facing the storage space when the door 20 is closed.

The refrigerator 1 may have a plurality of doors 20. For example, the refrigerator may include a door or a pair of doors 20 that open and close an upper storage space, and a door or a pair of doors 20 that open and close the lower storage space. However, the present disclosure is not limited to this, and the refrigerator 1 may have various combinations of doors 20.

The door(s) 20 may be connected by a hinge device and rotatably mounted on the cabinet 10, or may be provided as a drawer-type door 20 that can be introduced and withdrawn, i.e. inserted and withdrawn with respect to the cabinet.

In the refrigerator there may be multiple doors as depicted in FIG 1, but the present disclosure is not limited thereto, and the refrigerator may have only one door. In the refrigerator there may be one or more doors that are rotatable with respect to the cabinet for opening and closing the storage space, but the present disclosure is not limited thereto, and the refrigerator may have one or more doors that are withdrawable and insertable with respect to the cabinet for opening and closing the storage space. The refrigerator may also have one or more of the rotatable doors and one or more of the withdrawable and insertable doors. In short, the number and type (rotatable or withdrawable) is optional and does not limit the present disclosure.

The door 20 has a structure that allows the front surface to selectively emit light, and can be configured to shine with a set color and/or brightness. The user can change the overall outer appearance of the refrigerator 1 by manipulating or setting or changing the color and/or the brightness of the front surface of the door 20.

Meanwhile, optionally the door on at least one side may be formed to enable seeing through into the interior of the refrigerator, i.e. into the storage space. A see-through portion 12 may be formed on the door 20, which is an area though which the storage space on the rear surface of the door and/or the interior space of the refrigerator can be seen. The see-through portion 12 can be selectively transparent or opaque depending on the user's manipulation, and food stored in the refrigerator can be identified or seen through the see-through portion 12.

The see-through portion 12 may be formed only in a part of the door, e.g. a central part of the door, and the door may have a surrounding or circumferential part which has a structure that allows the front surface to selectively emit light, and can be configured to shine with a set color and/or brightness. The user can change the overall outer appearance of the refrigerator 1 by manipulating or setting or changing the color and/or the brightness of the surrounding or circumferential part of the front surface of the door 20.

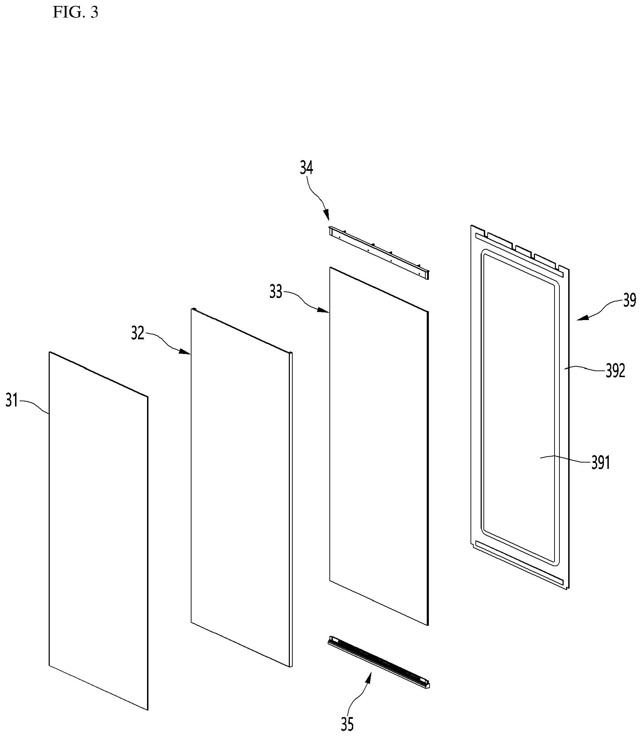

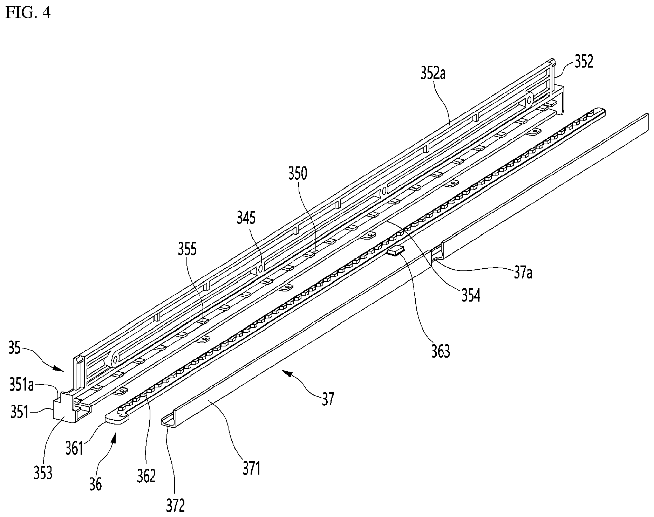

FIG. 2 is a perspective view illustrating the door, FIG. 3 is an exploded perspective view illustrating a state where the panel forming the front surface of the door is separated, and FIG. 4 is an exploded perspective view illustrating the lower bracket, lighting device, and lighting supporter, which are components of the panel.

The door 20 may have a default color which may be one of various colors, and when the refrigerator 1 includes a plurality of doors 20, each of the plurality of doors 20 may have same default color or a different default colors or some doors may have same default color while others have different default color. The color of the door 20 may refer to the color of the panel 30 shown to the user when the door 20 is closed. The default color of the door may be imparted by a default color of the panel 30, for example by a default color of a front plate 31, and/or of a support member 32 and/or of a light guide plate 33.

The door body 40 may include a body plate on which the panel 30 is mounted, and a door liner 42 that forms the rear surface of the door 20. The door body 40 may include side decorations 44 forming both left and right sides.

The door body 40 may include an upper cap decoration 43 and a lower cap decoration 45 that form the upper and lower surfaces of the door body 40, respectively. The open upper side or surface of the upper cap decoration 43 may be shielded by the decoration cover 46.

The panel 30 may include a front plate 31 that forms the outer appearance of a front surface of the panel 30 and/or of the door, a lighting device 36 that emits light so that the front plate 31 shines or emits light to the outside for example towards the front of the door, and a light guide plate 33 configured to receive light from the lighting device 36 and to guide the light received from the lighting device 36 towards the front plate 31 for example by diffusion of the light and/or by total internal reflections and subsequent exit of the light.

The panel 30 may include a support member 32 mounted between the light guide plate 33 and the front plate 31.

The panel 30 may include an upper bracket 34 forming an upper surface of the panel 30 and a lower bracket 35 forming a lower surface of the panel 30.

The panel 30 may include a back cover 39 forming a rear surface of the panel 30.

The front plate 31 may be transparent or translucent or semi- transparent or selectively-transparent so that light guided and/or transmitted via the light guide plate 33 can be transmitted through the front plate 31. The front plate 31 can prevent the internal components of the panel 30 (i.e. any components disposed inside an internal space defined in the panel 30) from being visible to the outside through the front plate 31 due to the color of the front plate 31 itself when the lighting device 36 is turned off.

The support member 32 can maintain a certain distance or gap between the light guide plate 33 and the front plate 31. The support member 32 may be formed of a material capable of transmitting light therethrough.

The lighting device 36 is configured to emit light toward the light guide plate 33. The lighting device 36 may be provided inside the lower bracket 35, and may be assembled and installed together with the lower bracket 35 while remaining mounted on the lower bracket 35. Alternatively or additionally, the lighting device 36 may be provided inside the upper bracket 34, and may be assembled and installed together with the upper bracket 34 while remaining mounted on the upper bracket 34. In the present disclosure, the lighting device 36 provided inside the lower bracket 35 has been depicted and explained, as an example, and the same or similar structure may be used for the upper bracket and the lighting device 36 may be disposed therein. The disclosure also envisages a plurality of lighting devices 36, wherein at least one (e.g. an upper lighting device) of the lighting devices 36 is disposed in the upper bracket 34 and at least one (e.g. a lower lighting device) of the lighting devices 36 is disposed in the lower bracket 35.

The lower bracket 35 may include a lower bracket front surface portion 351, a lower bracket rear surface portion 352, a lower bracket side portion 353, and a lower bracket lower surface portion 354.

A panel support portion 351a is formed at the upper end of the lower bracket front surface portion 351 to support the lower end of the front plate 31.

The lower bracket rear surface portion 352 supports the light guide plate 33 from the rear and may be combined or connected with the back cover 39. A or a plurality of lower bracket screw holes 345 into which a or plurality of screws are fastened, respectively, may be formed in the lower bracket rear surface portion 352.

A bracket opening 352a may be formed in the lower bracket rear surface portion 352. The lighting device 36 can be introduced and withdrawn through the bracket opening 352a. The bracket opening 352a may be shielded by the back cover 39.

The lower bracket lower surface portion 354 may form the bottom surface of the space where the lighting device 36 is mounted.

A light guide plate support portion 355 that supports the lower end of the light guide plate 33 may be formed on the lower bracket 35. A plurality of light guide plate support portions 355 may protrude rearward at regular intervals along the lower bracket front surface portion 351.

The lighting device 36 may include a substrate 361 and a plurality of light sources 362 arranged on the substrate 361. The plurality of light sources includes at least a first light source and a second light source, wherein the first light source is configured to emit light of a first light color and the second light source is configured to emit light of a second light color different than the first light color. Optionally, the plurality of light sources may further include a third light source configured to emit light of a third light color different from the first and the second light colors. The first light source and the second light source may each be an LED, e.g. the first light source may be an LED configured to emit one of red, green and blue light, and the second light source may be an LED configured to emit another of red, green and blue light. The third light source may be an LED, e.g. the third light source may be an LED configured to emit a remaining of the red, green and blue light, different from that of the first and the second LEDs. The light source is composed of RGB LED (Red Green Blue light emitting diode) and can emit light of various colors. Each light source provided in the lighting device 36 can be controlled independently, i.e. the first light source and/or the second light source and/or the third light source can be controller independently of the other light sources of the plurality of light sources. There may be a plurality of the first light sources and/or a plurality of the second light sources and/or a plurality of the third light sources, and each of the plurality can be controller independently of the other light sources of the plurality of light sources. Optionally, the light sources of the plurality of the first light sources may be controlled together, and/or the light sources of the plurality of the second light sources may be controlled together and/or the light sources of the plurality of the third light sources may be controlled together. Here the independent control may be setting of a state from switched-on state and switched-off state. The independent control may further include, when the state is switched-on state, setting a brightness level of the light source, wherein one or more of each of the light sources of the plurality of light sources are configured to operate at a plurality of different brightness levels. The independent control may further include, controlling a duty cycle of each of the plurality of light sources i.e. a ratio of time/duration the light source is in switched-on state compared to time/duration for which the light sources is in switched-off state, for example in a periodically repeated manner.

The lighting device is capable of emitting different colors by selectively illuminating the different light sources, thus is cable of emitting not just the default colors of the different light sources, but also generating or emitting colors by mixing the default colors of one or more of the different light sources.

A light supporter 37 may be provided inside the lower bracket 35. The light supporter 37 may support the lighting device 36 inside the lower bracket 35.

The light supporter 37 may be made of a metal material to dissipate heat generated by the lighting device 36 by conduction.

The light supporter 37 may include a first supporting portion 372 supporting the lighting device 36 and a second supporting portion 371 in contact with or fixed to the back cover 39.

The light supporter 37 has an opening 37a through which a connector 363 of the lighting device 36 can pass. The connector 363 is electrically connected to a controller that can control the lighting device 36 for example by providing signals from the controller via the connector 363 to the lighting device 36.

When the lighting device 36 is turned on according to an instruction from the controller 13, the light emitted from the LED 362 may be emitted toward the lower end of the light guide plate 33. Light incident through the lower end of the light guide plate 33 may be diffused and/or reflected along the light guide plate 33, e.g. total internal reflections and may move along the light guide plate 33, and may exit the light guide plate 33 towards the front panel 31.

Light directed forward through the light guide plate 33 shines on and/or through the front panel 31, and thus the front surface of the door 20 can shine with a set brightness and/or color.

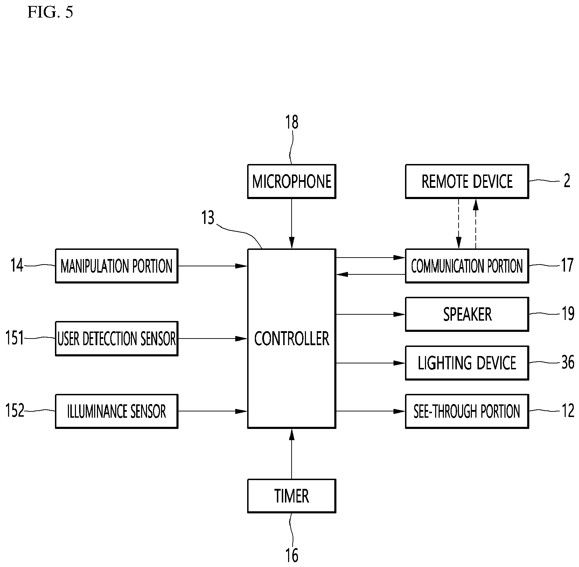

FIG. 5 is a block diagram illustrating the flow of control signals of a refrigerator, for example a refrigerator as discussed hereinabove.

When the lighting device 36 is turned off, the color of the outer appearance of the front surface of the refrigerator 1 can be expressed by the color of the panel 30 itself i.e. the default color of the panel 30. The color of the panel 30 when the lighting device 36 is turned off may be referred to as a first color.

When the lighting device 36 is operated, the color of the panel 30 may be 9hanged depending on a color of the light emitted from the lighting device 36. At this time, the color of the light emitted from the lighting device 36 may be referred to as a second color. As a result of the light emitted from the lighting device 36 i.e. the light of the second color passing through the panel 30 having the first color, a third color may be expressed at an outside of the panel 30. In other words, a changed color of the panel when the lighting device 36 is turned on can be said to be the third color.

The second color may be different from the third color, and the second color corrected/changed in consideration of the first color may be irradiated by the lighting device 36 to implement the third color of the panel 31 selected by the user.

In short, the panel 30 has a first color when the lighting device 36 is turned off, and the lighting device 36 can be controlled to emit light with a second color so that the panel shines with a third color according to information of the selected color. The selected color is a color selected or desired or set by the user, and may be implemented as the third color. Optionally, the user may also set or select a desired brightness for the third color. The lighting device is then lit or operated at a corresponding brightness to express the desired brightness for the third color out of the panel 30.

The color of the panel 31 may be determined by selective operation of the lighting device 36. For example, there may be different third colors which may be implemented by selective operation of the light sources of the lighting device 36.

As an example, the lighting device 36 can be operated and set through a remote device 2 away from the refrigerator 1, i.e. wirelessly.

The refrigerator 1 can communicate with the remote device 2 through the communication portion 17 connected to the controller 13, and the user can control the operation of the lighting device 36 through the remote device 2, i.e. remote controlled.

The communication portion 17 may have a structure capable of communicating in at least one of wired, wireless, and short-range communication (Bluetooth, Wi-Fi, Zigbee, NFC, or the like). Additionally, the remote device 2 may be a variety of devices capable of communication, such as a dedicated terminal, mobile phone, tablet, portable PC, desktop PC, remote controller, or Bluetooth speaker.

Optionally or additionally to being remote user controlled, the user may input a color (e.g. a desired color) through a manipulation portion 14 provided in the refrigerator 1 without using the remote device 2 i.e. direct contact user controlled.

Optionally or additionally to being remote controlled and/or direct contact user controlled, the lighting device 36 may be operated by a sensor, i.e. sensor controlled. For example, the sensor may be a user detection sensor 151 that detects user access to and/or distance from the refrigerator.

When the user approaches the refrigerator 1 by a set distance, the user detection sensor 151 can detect that the user is positioned at or closer than the set distance from the refrigerator, and accordingly transmit a signal to the controller 13, and cause the lighting device 36 to be turn on and/or to emit a desired color which may be preset by the user.

Optionally or additionally to being remote controlled and/or being direct contact user controlled and/or being sensor controlled, the lighting device 36 may be operated according to an illuminance detected by a illuminance sensor 152, i.e. ambient-illumination controlled. When the illuminance detected by the illuminance sensor 152 falls below a set illuminance, for example when it becomes dark in the surroundings of the refrigerator, the controller 13 can turn on the lighting device 36.

The controller 13 may be connected to a microphone 18. The lighting device 36 can be operated, for example the LED s362 can be switched on and/or made to shine in a set color, according to a voice signal received from the microphone 18, i.e. voice controlled. The voice controlled may be in addition to or alternative to any or each or all of the above controls discussed hereinabove, i.e. remote controlled, direct contact user control, sensor controlled and ambient-illumination controlled.

The controller 13 may be connected to a speaker 19. The controller 13 can control music to be output to the speaker 19 in conjunction with the operation of the lighting device 36.

The lighting device 36 can be turned on and off at a time set by the timer 16 i.e. timer controlled. The timer controlled may be in addition to or alternative to any or each or all of the above controls discussed hereinabove, i.e. remote controlled, direct contact user control, sensor controlled, ambient-illumination controlled and voice controlled.

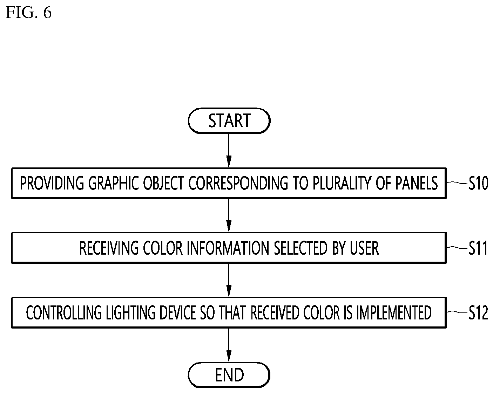

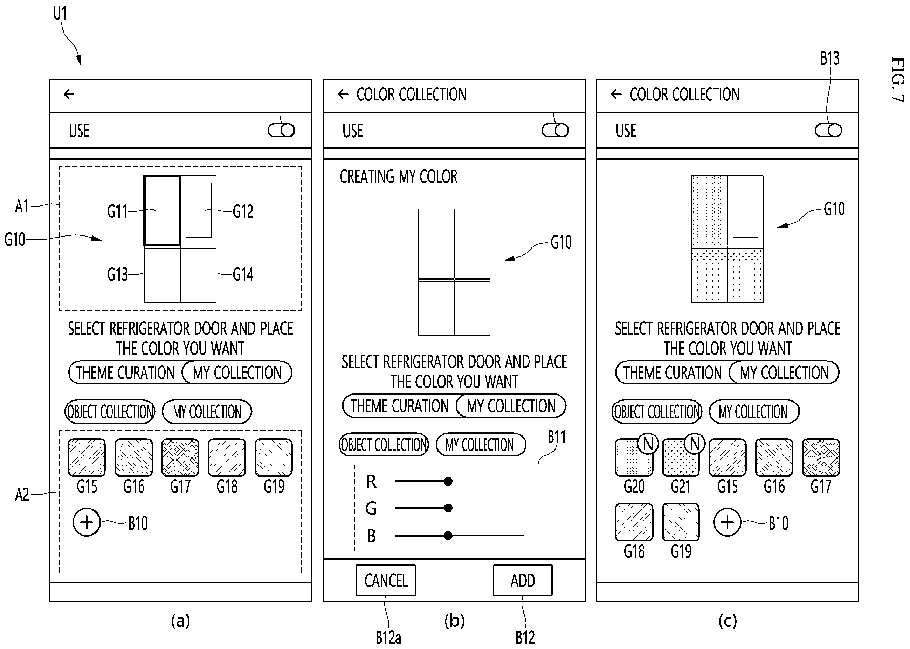

FIG. 6 is a flowchart for explaining a method of controlling the color of the panel with a user interface or an application for setting color of the panel e.g. 'My Collection' according to a first embodiment, and FIG. 7 is a diagram illustrating an example of a user interface for explaining a method of controlling the color of the panel with My Collection according to the first embodiment. The user interface or the application may be provided on a display of the home appliance or the refrigerator, for example a touch display provided on the home appliance/refrigerator door, or may be provided on a remote device e.g. a mobile device such as a smartphone, tablet, personal computer, laptop, etc. The method herein has been described for the remove device 2, but is equally applicable to the display provided on the home appliance or the refrigerator.

In a home appliance, e.g. a refrigerator, according to one embodiment, a user can select a desired color for a panel or each of a plurality of panels or for a door or each of the plurality of doors, for example through a remote device. Accordingly, the controller 13 can control the lighting device 36 to implement the color selected by the user.

At this time, optionally, the user can save the desired color by adjusting the R, G, and B areas. The method by which the user saves colors by adjusting the RGB area can also be optionally referred to as the My Collection method.

My collection control method includes providing a graphic object corresponding to a panel or each of a plurality of panels included in the home appliance (S10); receiving the RGB value selected by the user (S11) for the panel or for at least one of the plurality of panels or for each of the plurality of panels; and controlling the lighting device to implement one or more colors with the RGB values received on the panel (S12).

Before receiving the RGB value selected by the user, the user selects the desired color by adjusting the RGB value of the color.

The providing the graphic object (S10) may provide a user interface U1, optionally with information about the home appliance, to the user's remote device 2, that allows the user to simulate color combinations by applying the desired color to each of the plurality of panels of the user interface Ul'.

User interface means a graphical user interface. A graphical user interface or graphical object provided in one embodiment may be used to provide information to the user or receive the user's selection.

The first area A1 of the user interface U1 may display the shape of a refrigerator/home appliance having a door combination corresponding to the home appliance currently being used by the user. For example, in the case of a door combination consisting of four doors, a first graphic object G10 representing the shape of a refrigerator with four doors may be displayed, as illustrated in FIG. 7.

This first graphic object (G10) may include a first door graphic object (G11), a second door graphic object (G12), a third door graphic object (G13), and a fourth door graphic object (G14) corresponding to each of the four doors.

As illustrated in FIG. 7(a), when the user selects any one of the first to fourth door graphic objects G11, G12, G13, and G14 and selects color through the graphic objects S10 displayed in the second area A2, the selected color can be applied to the selected door graphic object.

When the user selects one of the first to fourth door graphic objects G11, G12, G13, and G14, a display indicating that the selected door graphic object has been selected may appear.

Graphic objects G15, G16, G17, G18, and G19 for pre-stored colors may be displayed in the second area A2. The pre-stored colors may include colors previously saved by the user or recently selected colors.

In addition, the user can immediately check the user interface U1 through the remote device 2 as well as by making the panel 30 shine in a selected color.

The user interface U1 may display an add color button B 10 for adding a new color.

The user interface U1 allows users to select the color a user wants by directly adjusting RGB values. When the user clicks the add color button B 10, a color selection button B11 that can adjust RGB values may be displayed in the second area A2, as illustrated in FIG. 7(b).

For example, as the red color control button moves to the right, the color of the panel 30 may be displayed closer to red. Additionally, as the green color control button moves to the right, the color of the panel 30 may be displayed closer to the green color. Additionally, as the blue color control button moves to the right, the color of the panel 30 may be displayed closer to blue.

The providing graphic objects and color control buttons corresponding to a plurality of panels of the home appliance includes selecting one of the graphic objects corresponding to the plurality of panels, and, when the color control button is controlled, changing the color of the selected graphic object.

In detail, the door graphic object selected by the user among the first to fourth door graphic objects G10 may be changed to a color corresponding to the RGB value of the user's color selection button B11.

The user interface U1 may display an add button B12 for adding the RGB value selected by the user and a cancel button B12a for returning to the previous step.

When the user clicks the add button B12, the color added by the user may be added and displayed as graphic objects G20 and G21 in the second area A2, as illustrated in FIG. 7I.

If the user clicks the cancel button B 12a, the user can return to the screen in FIG. 7(a) without saving the RGB value information selected by the user.

The user interface U1 may include a use button B13.

The user can add a color and select the use button B13 to apply the color to the home appliance 1.

The user can select a desired color graphic object among the color graphic objects G10 displayed in the second area A2 while selecting the door graphic object G10 whose color is desired to be changed.

When the user completes the selection, the remote device 2 can transmit color information corresponding to the plurality of panels to the refrigerator 1 (S11). This color information includes RGB values selected by the user.

The controller 13 can control the lighting device 36 based on the received information to make the panel 30 shine with a color set by the user (S12). Accordingly, the user can immediately check the home appliance to which the selected color is applied in the remote device 2.

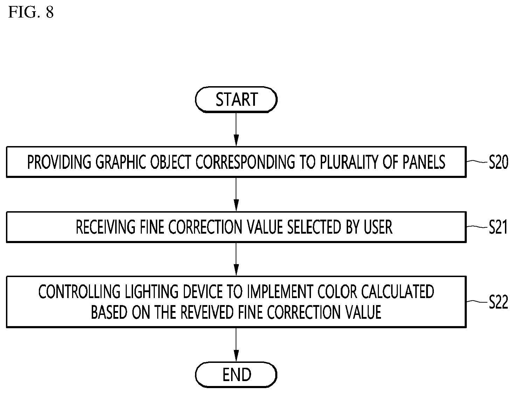

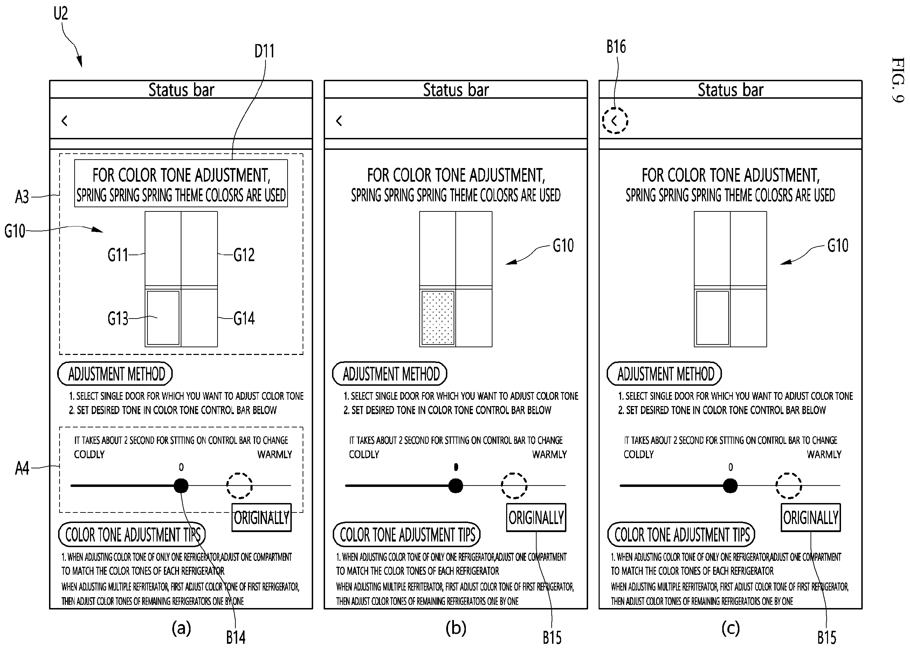

FIG. 8 is a flowchart for explaining a method of controlling the color of the panel by fine-tuning color tone according to the second embodiment, and FIG. 9 is a diagram illustrating an example of a user interface for explaining a method of controlling the color of the panel by fine-tuning color tone according to the second embodiment.

The home appliance according to one embodiment may adjust the brightness (blackness) or chromaticness of the color of the panel 30 so that the user can implement the color desired for each panel. This method can also be called a color tone fine adjustment method.

The controller 13 is linked with the remote device 2, so that when the user adjusts the color of the panel 30 through the remote device 2, the lighting device 36 can be controlled with the adjusted color. Accordingly, the user can immediately check the changing color of the panel 30 and adjust the color through the remote device 2.

My collection control method includes providing a graphic object corresponding to a plurality of panels included in the home appliance (S20); receiving a fine correction value selected by the user (S21); and controlling the lighting device to implement the color with the fine correction value received on the panel (S22). The fine correction value may be the RGB value of the color selected by the user.

The providing a graphic object (S20) may provide a user interface U2 that can finely adjust the desired color for a plurality of panels of home appliances to the u'er's remote device 2.

The third area A3 of the user interface U2 may display the shape of a refrigerator having a door combination corresponding to the home appliance currently being used by the user.

Additionally, a graphic object G10 to which the color currently being applied is applied may be displayed on each of the plurality of panels. This graphic object G10 may include a first door graphic object G11, a second door graphic object G12, a third door graphic object G13, and a fourth door graphic object G14.

The color information D11 currently in use may be displayed in the third area A3. In detail, if the color currently applied to the panel 30 is a My Collection color, the color name saved by the user may be displayed. Alternatively, if the color currently applied to the panel 30 is a pre-stored theme color, the name corresponding to the selected color may be displayed.

As illustrated in FIG. 9(a), when the user selects the control button B14 displayed in the fourth area A4 and moves the control button in the left or right direction, the chromaticness (for example hue and/or saturation) of the color of the first to fourth door graphic objects G10 may be changed corresponding to the control button B14.

Of course, in some cases, the control button B14 displayed in the fourth area A4 may further include a button for adjusting the brightness. In this case, the chromaticness of the entire first to fourth door graphic objects G10 may be changed in correspondence with the control button B14.

At this time, the remote device 2 and the home appliance 1 may be linked to each other through the communication portion 17.

When the user adjusts the control button B14, the remote device 2 can transmit the changed chromaticness value to the communication portion 17. The controller 13 may receive the chromaticness value through the communication portion 17 and control the lighting device 36 according to the changed chromaticness value. Here, the chromaticness value may be an RGB value of a finely adjusted color.

Accordingly, the user can check that the color of the panel 30 of the home appliance changes while adjusting it through the remote device 2.

Additionally, as illustrated in FIG. 9(b), the user can select any one of the first to fourth door graphic objects G10. Also, if the control button B14 displayed in the fourth area A4 is selected and moved in the left and right direction, a finely adjusted color can be applied to the selected door graphic object G10.

The user can select one of the door graphic objects G10 in the third area A3. The chromaticness value of the color being applied to the selected door graphic object G10 may be displayed in the fourth area A4.

The user interface U2 may include a previous button B15. When the user clicks the previous button B15, the finely adjusted color is not applied to the selected panel, and the originally applied color may be returned.

Additionally, the user interface U2 may include a cancel button B16. When the user clicks the cancel button B16, the finely adjusted color is not applied to the entire panel, as illustrated in FigurI(c), and the original applied color may be returned.

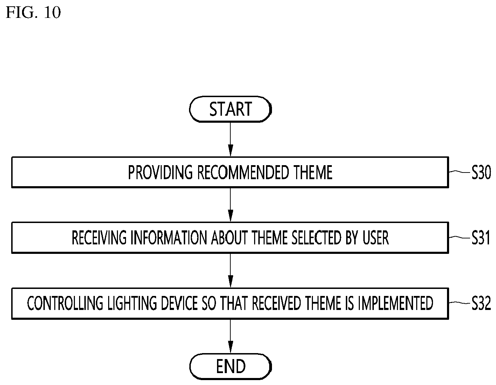

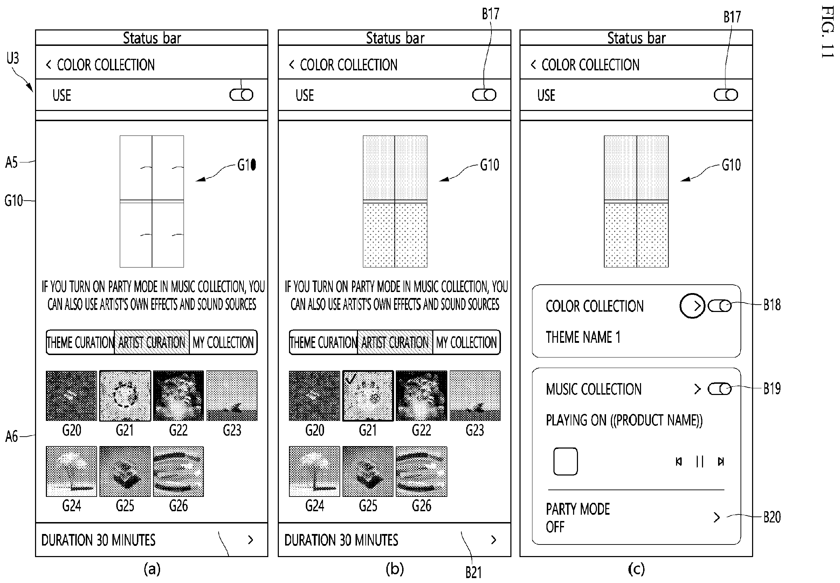

FIG. 10 is a flowchart for explaining a method of controlling the color of the panel with an artist collection according to the third embodiment, and FIG. 11 is a diagram illustrating an example of a user interface for explaining a method of adjusting the color of the panel with an artist collection according to the third embodiment.

The home appliance according to one embodiment recommends a theme that includes a combination of colors for a plurality of panels 30, a sound source output to the speaker 19, and a dynamic image implemented in the panel 30, and the selected theme can be implemented.

In the home appliance 1, a plurality of light sources 362 may be independently controlled according to the intensity, beat, or pitch of the sound source output from the speaker 19 according to user settings.

Additionally, the light sources 362 of the lighting device 36 can be controlled independently. Each light source 362 can be controlled to have different colors and brightness. Accordingly, the panel 30 can implement a dynamic image using the lighting device 36.

Additionally, the home appliance 1 may be equipped with a speaker 19. The speaker 19 may be provided on the upper surface of the cabinet 10. The speaker 19 may be a Bluetooth speaker that can be linked with the remote device 2.

Each of the plurality of panels 30 can implement a moving image in conjunction with a sound source output from the speaker 19.

The artist collection control method provides a theme by combining colors, music, and effects previously selected by an artist in the field of art, such as fine art or music, and may implement the selected theme by controlling the lighting device 36 and speaker 19.

The artist collection control method includes providing a recommended theme (S30); receiving information about the theme selected by the user (S31); and controlling the lighting device 36 to implement the received theme (S32).

In other words, the artist collection control method includes providing a graphic object corresponding to a plurality of panels of the home appliance and a plurality of theme graphic objects each representing a plurality of themes (S30); receiving theme information including color information of a graphic object selected from the plurality of theme graphic objects (S31); and controlling the lighting device so that the panel shines according to the received color information (S32).

Additionally, the theme information further includes sound source information, and the controlling the lighting device may control the speaker to output according to sound source information.

In addition, the theme information further includes control information for varying the color and brightness of the plurality of light sources constituting the lighting device over time, and, in the controlling the lighting device, the panel can be controlled to implement dynamic effects according to control information.

In the providing a recommended theme (S30), a user interface U3 that allows the user to select a desired theme for a plurality of panels may be provided to th' user's remote device 2.

Referring to FIG. 11(a), the fifth area A5 of the user interface U3 may display the shape of a refrigerator having a door combination corresponding to the home appliance currently being used by the user.

Additionally, a graphic object G10 to which the color currently being applied is applied may be displayed on each of the plurality of panels. This graphic object G10 may include a first door graphic object G11, a second door graphic object G12, a third door graphic object (G13), and a fourth door graphic object G14.

Graphic objects G20, G21, G22, G23, G24, G25, G26) for recommended themes may be displayed in the sixth area A6. Recommended themes may include dynamic effects through independent control of colors, sound sources, and lighting sources 36.

Graphic objects G20, G21, G22, G23, G24, G25, G26 may be displayed as images representing recommended themes. For example, representative works of artists may be displayed.

When a graphic object G20, G21, G22, G23, G24, G25, G26 is selected in the user interface U3, a description of the theme can be displayed. For example, information about the 'rtist's profile, representative work images, music used in the theme, and colors can be displayed.

The color selected by the artist may include a color family selected in advance by the artist or represented in the image of the 'rtist's work. Sound sources may also be selected in advance by the artist or may include sound sources that match the image of the 'rtist's work.

Dynamic effects can be achieved by controlling the color and brightness of each light source of the lighting device 36 over time.

When the user selects one of the graphic objects (G20, G21, G22, G23, G24, G25, G26) representing the recommended theme, a state of the home appliance to which the theme is applied can be displayed in the fourth area (A4), as illustrated in Figure 11(b).

When the use button B17 is clicked, the remote device 2 can transmit information about the theme to the controller 13. The controller 13 can control the lighting device 36 and the speaker 19 based on the received information.

Additionally, the user interface U3 may include a screen provided with buttons B18, B19, B20 for selecting the effect to be applied among the colors, music, and dynamic effects of the selected theme.

For example, the user can set only the color selection button (B18) of the theme to be turned on to apply only the color to the panel 30 and not apply music and dynamic effects to the panel 30.

In addition, the user can set the panel 30 to be implemented in the color of the theme and the sound source to be output from the speaker 19 device by only turning on the theme color selection button B18 and the music button B19.

The user interface U3 may include a button B21 for setting the time for which the selected theme effect lasts.

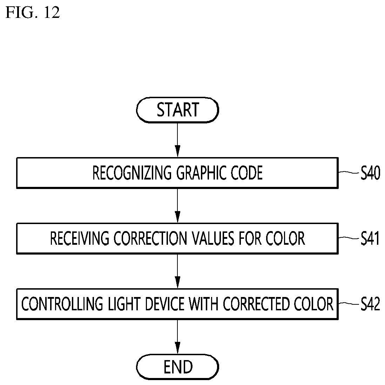

FIG. 12 is a flowchart for explaining a method of controlling a lighting device by reflecting the'panel's own color according to the fourth embodiment.

Meanwhile, the front plate 31 constituting the panel 30 may have its own unique color, i.e. default color. In other words, when the lighting device 36 is turned off, the outer appearance the front surface of the door can be formed in the color of the front plate 31 itself.

When the lighting device 36 is turned on, the light emitted from the lighting device 36 passes through the front plate 31, and in this process, the color of the light emitted from the lighting device 36 and the color of the front plate 31 may be mixed. Accordingly, in order to implement the color desired by the user, the color of the lighting device 36 can be controlled by considering the color of the front plate 31.

The controller 13 can control the color of light emitted from the lighting device 36 so that the panel 30 is implemented in a color desired by the user.

A method of changing the color of the panel may include recognizing a graphic code that includes information of first color and obtaining a correction value for calculating information of second color.

The method for changing color of a panel may include recognizing a graphic code including information of first color and obtaining a correction value for calculating information of the second color.

In detail, the panel 30 may be provided with a graphic code that can identify unique information according to the color of the front plate 31 itself.

This graphic code may be a bar code or QR code and may be provided on the outer surface of the front plate 31.

The graphic code may include RGB values of the front plate 31. The graphic code may further include a correction value reflecting the color of the front plate 31. This correction value can be determined or calculated by an experimental value using the RGB value to be implemented in the panel 30, the RGB value emitted from the lighting device 36, and the RGB value implemented in the panel 30 through the front plate 31 as variables.

At the manufacturing or assembling step of the home appliance 1, operators can recognize the graphic code through a remote device or the like (S40).

At this time, it is possible to check the correction value reflecting the color of the front plate 31 by linking with the server through the recognized graphic code.

The operator can transmit the RGB value of the front plate 31 and the correction value checked through a remote device or the like to the controller 13 through the communication portion 17. The controller 13 may store the received RGB values and correction values in the memory portion (S41).

The controller 13 may calculate the final corrected RGB color value by reflecting the correction value and processing the RGB value set by the user and the correction value.

Alternatively, the corrected RGB values can be received through a remote device or server connected to the controller 13. The controller 13 may control the lighting device 36 to emit corrected RGB color values (S42).

Accordingly, the panel 30 can be implemented to shine in a color desired by the user.

This color correction method can also be applied to a method of controlling the color of the panel through fine adjustment of color tone. In detail, when the user selects the control button B14 and makes fine adjustments, the RGB color correction value can be transmitted to the controller 13. The controller 13 can control the lighting device 36 with a calculated value that reflects the received correction value.

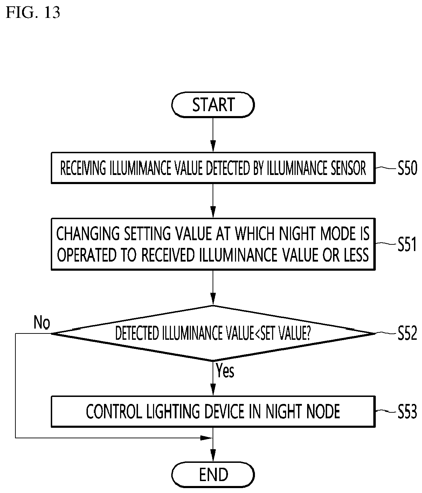

FIG. 13 is a flowchart for explaining a method of controlling an illumination sensor based on ambient brightness according to the fifth embodiment.

Meanwhile, home appliances may be equipped with an illuminance sensor 152 that detects surrounding brightness. According to the illuminance value detected by the illuminance sensor 152, the intensity of light emitted from the lighting device 36 can be adjusted.

For example, when the illuminance value detected by the illuminance sensor 152 is a set value or less, it is possible to recognize that the surrounding brightness is dark and the brightness of the panel 30 may be lowered. In other words, in a night environment, energy can be saved by turning off the lighting device 36 or adjusting the intensity of light to a low level. In this way, turning off the lighting device 36 or adjusting the intensity of light to low in a dark environment can be called night mode control.

Meanwhile, the amount of light detected may vary according to the location where the illuminance sensor 152 is installed in the home appliance 1 and the environment in which the home appliance 1 is placed. For example, the home appliance 1 is a built-in type and is installed inside the furniture cabinet, so the light entering the illuminance sensor 152 may be blocked. In this case, even though the surrounding environment is bright, it is recognized as a dark environment and the night mode is activated, so the brightness of the panel 30 may become dark.

In one embodiment of the present disclosure, the user can directly set the sensitivity of the illuminance sensor 152 to adjust the setting value at which the night mode is activated.

For example, the user can select the sensitivity of the illuminance sensor 152 from low, normal, or high through the remote device 2 or the manipulation portion 14. For example, as the sensitivity of the illuminance sensor 152 increases from low to high, the illuminance value at which the night mode is activated may decrease.

Alternatively, the user can correct the sensitivity of the illuminance sensor 152 through the remote device 2 or the manipulation portion 14.

The user can have the illuminance sensor 152 detect the current brightness through the remote device 2 or the manipulation portion 14 in an environment in which the night mode is desired to operate.

For example, when a user requests information about the illuminance value of the illuminance sensor 152 through the remote device 2, the controller 13 can transmit information about the illuminance value detected by the illuminance sensor 152 to the remote device 2 (S50).

Additionally, the user interface area displayed on the remote device 2 may display a prompt to select whether to operate the night mode when the illuminance is below the detected illuminance value (S51).

When the user selects to operate the night mode, the controller 13 can change the setting value for operating the night mode to the detected illuminance value or less (S52).

Accordingly, when the user wants the night mode to operate in an environment where the illuminance value detected by the illuminance sensor 152 is the set value or less, the controller 13 may lower the intensity of the light emitted from the lighting device 36 or turn off the lighting device 36 (S53).

In other words, the night mode can control the brightness of the lighting device to be dimmer than before when the illuminance value detected by the illuminance sensor is a set value or less.

This night mode step may include providing information about the illuminance value detected by the illuminance sensor; displaying a display to select whether to operate the night mode when the illuminance value is the detected illuminance value or less; when the user selects night mode operation, changing the setting value to a level the detected illuminance value or less.

Additionally, the method may further include activating the night mode when the illuminance value detected by the illuminance sensor is the changed setting value or less.

Alternatively, the user can set the time for the night mode to operate through the remote device 2 or the manipulation portion 14.

Meanwhile, the home appliance according to one embodiment may be provided with a lighting device inside the see-through portion 12. In addition, the see-through portion 12 can be selectively made transparent or opaque according to th' user's manipulation through the lighting device.

Additionally, the lighting device of the see-through portion 12 can implement RGB colors by including an LED light source.

Additionally, the door 20 provided with the see-through portion 12 may be equipped with a lighting device 36 that causes the panel 30 to shine in a set color. In other words, the door 20 provided with the see-through portion 12 is provided with a lighting device 36 inside the panel 30 and a lighting device 36 inside the see-through portion 12, and can be controlled independently.

At this time, according to user settings, when the lighting device 36 within the panel 30 is turned on, the lighting device inside the see-through portion 12 may be controlled to be turned off. Accordingly, when the lighting device 36 of the panel 30 is turned on, the lighting device inside the see-through portion 12 is turned on, thereby preventing the inside of the refrigerator from being transparent.

Additionally, according to user settings, the lighting device inside the see-through portion 12 may be controlled to be turned on while the lighting device 36 within the panel 30 is turned on. At this time, the lighting device inside the see-through portion 12 may be the same as or similar to the lighting device 36 within the panel 30 or may be emitted with a harmonious color.

In this way, controlling the lighting device inside the see-through portion 12 to turn on and off may also be called insta-view control.

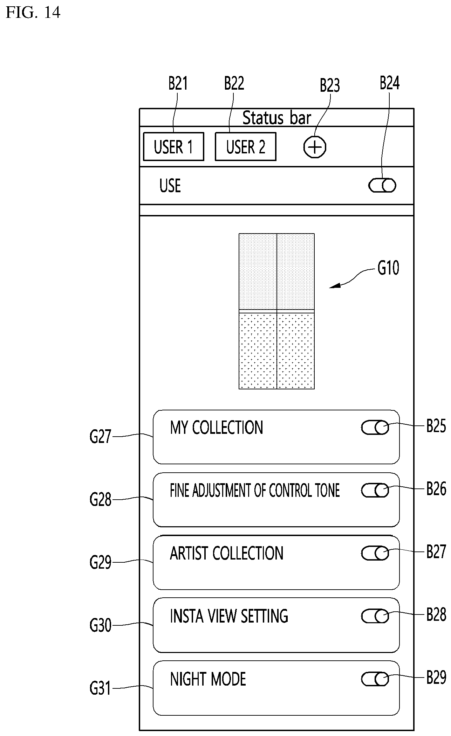

FIG. 14 is a diagram illustrating an example of a user interface for explaining a method of controlling a home appliance with a user customization function according to the sixth embodiment.

The home appliance 1 according to an embodiment of the present disclosure can set the color, brightness, or the like of the panel 30 preset by the user at once according to the user setting function.

As illustrated in FIG. 14, when the user selects the user button B21, B22 displayed on the remote device 2 or the home appliance 1, the home appliance can be controlled as preset for the selected user.

For example, when the user button B21 is selected, settings corresponding to the selected user may be displayed on the screen. This settings screen may include at least one of the previously described My Collection G27, Color Tone Fine Control G28, Artist Collection G29, Insta-View Settings G30, and Night Mode G31.

The user can change the color of the panel 30 or adjust the brightness by selecting each use button B25, B26, B27, B28, B29 displayed on the settings screen.

Additionally, the settings screen may further include a use button B24 that can operate all settings at once. If you select the use button B24, you can operate the home appliance in preset settings such as My Collection, Color Tone Fine Control, Artist Collection, Insta View Settings, and Night Mode.

Meanwhile, when the user selects the use button B25 displayed in My Collection G27, the color of the panel 30 can be changed to a color according to the preset My Collection G27. The color information of this My Collection can be set by the user in advance.

In detail, when the user selects the use button B25 of the My Collection G27, the remote device 2 can transmit color information set to My Collection through the communication portion 17. Based on the received color information, the controller 13 can control the lighting device so that the color of the panel 30 shines with the color set in My Collection.

When the user selects the use button B26 displayed on the color tone fine adjustment G28, the color of the panel 30 can be changed to a color according to the preset color tone fine adjustment G28.

When the user selects the use button B27 displayed in the artist collection G29, the color of the panel 30 can be changed to a color according to the preset artist collection G29. Additionally, sound sources according to a preset artist collection can be controlled to be output through the speaker. Additionally, dynamic effects can be implemented on the panel 30 according to a preset artist collection.

When the user selects the use button B28 displayed in the Insta View settings G30, the home appliance can be controlled with the preset Insta View settings. For example, when the panel 30 shines by the lighting device being operated, the lighting device inside the see-through portion 12 may be controlled to be turned off.

When the user selects the use button B29 of the night mode G31, the brightness of the panel 30 can be adjusted according to the preset night mode.

When the user selects the use button B25, B26, B27, B28, B29, it can be displayed on the graphic object G10 that the home appliance changes to a set state in conjunction with this.

These user buttons B21, B23 can be used to add users by selecting the add button B23 as needed.

In this way, the desired color and the corresponding control functions can be set and stored in advance, and an interface can be provided where the user can change all the desired settings at once using the user setting function.

Users can update new features of home appliances through remote devices. Home appliances can add new functions through updates with the server. For example, the remote device 2 may download a program storing a user interface capable of implementing the above-described embodiments through an update.

Such a user interface may be written as a program that can be executed on ' user's remote device or computer. The remote device 2 can download and run these programs through the server.

The communication portion 17 of the home appliance is connected to a server, so that programs with new functions can be downloaded. These programs may include information for implementing the user interface described above.

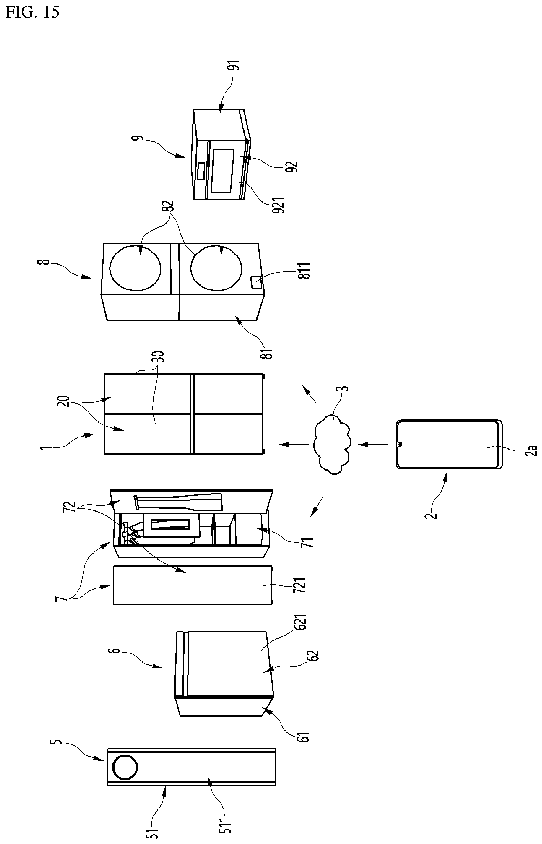

FIG. 15 is a diagram illustrating an example of adjusting the colors of home appliances using a remote device.

The home appliance according to an embodiment of the present disclosure may have an outer appearance formed by the panel 30, and the outer appearance may be changed to a color set by the user according to the operation of the lighting device 36.

For example, such a home appliance may be any one of a refrigerator 1, an air conditioner 5, a dishwasher 6, a clothes care machine 7, a washing machine 8, or a cooking appliance9. Each of these has the same structure as the panel 30 of the embodiment of the present disclosure, so that the color of the outer appearance of the front surface can be freely changed.

In the refrigerator 1, a panel 30 may be provided on the front surface of the door 20 that opens and closes the cabinet 10.

The indoor unit of the air conditioner 5 may have a space provided with a heat exchange device and a fan inside the case 51 that forms the outer appearance. The front surface of the case 51 may be formed by a panel 511.

The dishwasher 6 may have a space for washing dishes inside the case 61 that forms the outer appearance. The front surface of the case 61 can be opened and closed by the door 62, and the front surface of the door 62 can be formed by the panel 621.

The clothes care machine 7 may include a case 71 that forms a space for storing clothing, and a door 72 that opens and closes the front surface of the case 71. The front surface of the door 72 may be formed by a panel 721.

The washing machine 8 or dryer may include a case 81 providing a space for washing or drying, and a door 82 that opens and closes the case 81. The front surface of the case 81 may be formed by a panel 811.

The cooking appliance 9 may include a case 91 with a space for cooking food, and a door 92 that opens and closes the case 91. The front surface of the door 92 may be formed by a panel 921.

These home appliances can have their panels glow in a color set by the user.

## Claims

1. A method for setting an appearance of a panel of a home appliance, the panel providing an outer appearance of the home appliance and configured to receive light emitted by a lighting device of the home appliance and to shine by transmitting therethrough the received light to an outside of the home appliance, the method comprising:
providing (S10, S20, S30), on a touch screen display, a user interface (U1, U2, U3) including one or more first graphic objects (G11-G14) and one or more control buttons (G15-G19, B11, G20-G26), wherein the one or more first graphic objects represents one or more panels (30) of the home appliance, respectively, and the one or more control buttons is configured to receive user input corresponding to a selection of a color for a panel of the home appliance and/or corresponding to a selection of a theme for a panel of the home appliance;
receiving, on the one or more control buttons (G15-G19, B11, G20-G26), one or more user inputs for selecting by the user a color and/or a theme for the panel of the home appliance and correspondingly generating information on the color selected by the user and/or information on the theme selected by the user;
receiving (S11), by a controller (13) of the home appliance, the information on the color selected by the user and/or the information on the theme selected by the user; and
controlling (S12), by the controller (13) of the home appliance, the lighting device to make the panel shine according to the information on the color so received and/or according to the information on the theme so received.

2. The method of claim 1, wherein the one or more first graphic objects (G11-G14) includes a plurality of first graphic objects, and wherein each first graphic object is user selectable by receiving a user input on said first graphic object, and wherein the method comprises:
selecting at least one first graphic object by receiving user input on said first graphic object, and
wherein the receiving, on the one or more control buttons (G15-G19, B11, G20-G26), the one or more user inputs comprises selecting by the user a color and/or a theme for the panel of the home appliance represented by the selected at least one first graphic object.

3. The method of claim 2, when the one or more user inputs for selecting by the user a color and/or a theme for the panel of the home appliance is received on the one or more control buttons (G15-G19, B11, G20-G26),
the method further comprises:
displaying, on the one or more first graphic objects (G11-G14), the color selected by the user and/or the theme selected by the user.

4. The method of any one of the preceding claims, wherein the touch screen display is provided on a remote device (2) configured to communicate with the controller (13) of the home appliance, or wherein the home appliance comprises the touch screen display provided thereon and communicating with the controller (13) of the home appliance.

5. The method of any one of the preceding claims, wherein the one or more control buttons includes a plurality of second graphic objects (G15-G26) representing different pre-stored colors and/or different pre-stored themes,
wherein a pre-stored color from the different pre-stored colors and/or a pre-stored theme from the different pre-stored themes is user selectable by receiving a user input on a corresponding second graphic object representing said pre-stored color and/or said pre-stored theme, and
wherein the receiving, on the one or more control buttons (G15-G19, B11, G20-G26), the one or more user inputs for selecting by the user a color and/or a theme, comprises:
selecting, by the user, a pre-stored color from the different pre-stored colors and/or a pre-stored theme from the different pre-stored themes by receiving user input on a corresponding second graphic object.

6. The method of any one of the preceding claims, wherein the one or more control buttons includes a color selection button (B11) configured to receive user input for adjusting a Red, Green and Blue, R, G, and B, values, for the color selected by the user, respectively; and
wherein the receiving, on the one or more control buttons (G15-G19, B11, G20-G26), the one or more user inputs for selecting by the user a color and/or a theme, comprises:
adjusting a R, G, and B value for the color selected by the user by receiving user input on the color selection button (B11).

7. The method of claim 6, when the user input is received on the color selection button (B11) for adjusting the R, G, and B value for the color selected by the user,
the method further comprises:
displaying, on the one or more first graphic objects (G11-G14), an adjusting of the color.

8. The method of claim 6 or 7, wherein the one or more control buttons includes at least one control button to adjust at least one of a chromaticness of the color selected by the user, a hue of the color selected by the user, a saturation of the color selected by the user, a brightness of the color selected by the user, and a combination thereof.

9. The method of any one of the preceding claims, wherein the panel has a first color when the lighting device (36) is in a turned-off state,
wherein the controlling (S12), by the controller (13) of the home appliance, the lighting device (36) comprises: controlling the lighting device to emit a light having a second color so that the panel shines in a third color resulting from the light emitted from the lighting device being transmitted through the panel, wherein the third color is color selected by the user.

10. The method of claim 9, wherein the touch screen display is provided on a remote device (2) configured to communicate with the controller (13) of the home appliance, and wherein the method further comprises:
recognizing, by the remote device, a graphic code including information of the first color and obtaining a correction value based on the information of the first color recognized by the graphic code for determining the second color to be emitted by the lighting device such that when the second color emitted from the lighting device is transmitted through the panel, the third color is output by the panel.

11. The method of any one of the preceding claims, wherein the lighting device of the home appliance comprises a plurality of light sources (362) configured to be controllable independent of each other, and
wherein the theme includes a combination of colors and/or and a dynamic image to be implemented in the one or more panels (30); and
wherein in generating the information on the theme selected by the user, the information on the theme includes information about controlling the light sources (362) independent of each other to implement the combination of colors and/or the dynamic image in the one or more panels (30); and
in controlling (S12), by the controller (13) of the home appliance, the lighting device to make the panel shine includes controlling the light sources (362) independent of each other according to the information about controlling the light sources (362).

12. The method of claim 11, wherein in the controlling the light sources (362) independent of each other according to the information about controlling the light sources (362) includes: controlling each of the light sources (362) independent of each other to vary the color emitted by the lighting device (36), and/or to vary a brightness and/or a duty cycle of each of the plurality of light sources (362).

13. The method of any one of the preceding claims, wherein the home appliance comprises an illuminance sensor (152) for detecting an illuminance value of a space surrounding home appliance, wherein the method further comprising:
a night mode step of controlling a brightness of the lighting device (36) to be reduced when an illuminance value detected by the illuminance sensor lowers to reach a value equal to or below a set value.

14. A home appliance comprising:
a cabinet (10) having storage space;
a door (20) for opening and closing the storage space;
a lighting device (36) for emitting light;
a panel (30) providing an outer appearance of the home appliance and configured to receive light emitted by the lighting device and to shine by transmitting therethrough the received light to an outside of the home appliance;
a manipulation unit (14) for receiving a user input, wherein the manipulation unit (14) comprises a touch screen display; and
a controller (13) configured to communicate with the touch screen display and configured to control the touch screen display and the lighting device (36),
wherein the controller is configured to perform a method according to any one the preceding claims.

15. A system comprising: a home appliance (1) and a remote device (2) configured to communicate with each other;
wherein the home appliance (1) comprises: a cabinet (10) having storage space, a door (20) for opening and closing the storage space, a lighting device (36) for emitting light, a panel (30) providing an outer appearance of the home appliance and configured to receive light emitted by the lighting device (36) and to shine by transmitting therethrough the received light to an outside of the home appliance, and a controller (13) configured to control the lighting device (36);
wherein the remote device comprises a touch screen display; and
wherein the remote device and the controller (13) of the home appliance (1) are configured to perform a method according to any one the preceding claims 1 to 13;
wherein the remote device is configured:
- to provide, on the touch screen display, a user interface (U1, U2, U3) including one or more first graphic objects (G11-G14) and one or more control buttons (G15-G19, B11, G20-G26), wherein the one or more first graphic objects represents one or more panels (30) of the home appliance, respectively, and the one or more control buttons is configured to receive user input corresponding to a selection of a color for a panel of the home appliance and/or corresponding to a selection of a theme for a panel of the home appliance, and
- to receive, on the one or more control buttons (G15-G19, B11, G20-G26), one or more user inputs for selecting by the user a color and/or a theme for the panel of the home appliance and correspondingly generate information on the color selected by the user and/or information on the theme selected by the user; and
wherein the controller (13) of the home appliance (1) is configured:
- to receive (S11) the information on the color selected by the user and/or the information on the theme selected by the user, and
- to control (S12) the lighting device to make the panel shine according to the information on the color so received and/or according to the information on the theme so received.
